# EUROPEAN PATENT APPLICATION

(11) **EP 4 642 068 A1**
(43) Date of publication of application: **29.10.2025**
(21) Application number: 24305635.5
(22) Date of filing: 24.04.2024
(51) Int. Cl.: H04W 12/04, H04W 4/50, H04W 12/30

(54) **A METHOD FOR INSTALLING A CREDENTIAL ON AN INTEGRATED SIM**

(71) Applicant: THALES DIS FRANCE SAS, 92190 Meudon (FR)
(72) Inventor: DEMARTY, Joël, 35520 MONTREUIL LE GAST (FR); LELOUP, Laurent, 13124 PEYPIN (FR)
(74) Representative: Grevin, Emmanuel

(57) **Abstract**

Aspects of the present disclosure are directed toward a virtual bound credential, created by the steps of generating by an In-Factory Binding Box a virtual iSIM, wherein the virtual iSIM comprises a virtual iSIM identifier and a virtual TRE key, wherein the virtual TRE key comprises a virtual TRE public part and a virtual TRE private part; preparing by the In-Factory Binding Box an output file comprising the virtual vTRE_ID and the virtual TRE public part of the virtual TRE Key that corresponds to the virtual iSIM, and binding, by a remote activation server, the output file with a RSP credential to form the virtual bound credential.

## Description

### Field of Use

The present disclosure concerns a method and system for provisioning an MNO profile in an integrated SIM, and specifically for securely obtaining and storing a profile.

### Background

An integrated subscriber identity module (iSIM) is a secure element that is not removable from a device, and may in fact be integrated directly into the processor of the device within which it operates (for instance, the iSIM is integrated directly within a tamper-resistant element (TRE) on the device's system-on-a-chip (SoC)). This enables devices to connect to a cellular network without needing a physical SIM card or soldered embedded subscriber identity module (eSIM) in a printed circuit board. The device can be a smartphone, a PC, an automobile, or an loT device, for example.

The initial MNO profile (or Provisioning Profile) and credentials for remote provisioning are usually loaded in a Global System for Mobile Communications Association (GSMA)-certified secure location at the manufacturer premises to protect the MNO sensitive assets and to avoid SIM cloning. As the chip maker is selling directly to the module maker, the sensitive assets cannot be loaded by the module maker if they are not protected. Thus, the chip maker loads the TRE key in a secure site, the manufacturer prepares the sensitive data bound with the TRE key, and then, the module maker can load data without security. This process is referred to as "2-step perso" by GSMA. The 1st step, Perso_SC, generally involves the loading of Secure Credentials (i.e. TRE Key) by the chip maker in a secure environment. The 2nd step, Perso_UICC, generally involves the preparation of credentials protected by keys. The module maker can then load the data in a non-secured environment.

### Summary

An aspect of the disclosure is directed toward a virtual bound credential, created by the steps of generating by an In-Factory Binding Box a virtual iSIM, wherein the virtual iSIM comprises a virtual iSIM identifier and a virtual TRE key pair, wherein the virtual TRE key pair comprises a virtual TRE public part and a virtual TRE private part; preparing by the In-Factory Binding Box an output file comprising the virtual vTRE_ID and the virtual TRE public part of the virtual TRE key pair that corresponds to the virtual iSIM, and binding, by a remote activation server, the output file with a RSP credential to form the virtual bound credential.

Thus, the RSP credential can be securely obtained by the manufacturer even before the devices onto which the RSP credential are to be installed have been secured by the manufacturer due to the use of the virtual elements that simulate the real device.

In an aspect of the disclosure, the In-Factory Binding Box transmits the output file to an intermediary system and the intermediary system transmits the output file to the remote activation server.

In this way, the manufacturer is able to maintain a system that is "off the grid" that is able to perform aspects of key management, transciphering, and provisioning profile management (each profile is always bound to 1 unique key, and ensure each profile cannot be used twice to prevent cloning) while simultaneously having the ability to communicate with external servers that contain data that may be used during the process, such as credentials, profiles, etc.

In an aspect of the disclosure, the RSP credential is generated by the remote activation server.

In an aspect of the disclosure, the virtual bound credential is stored within a secure storage of the In-Factory Binding Box.

Since the module maker no longer needs to know the TRE Key in order to obtain the RSP credential, the module maker does not need to receive it from the Chip makers, and the chip makers don't need to trace which chips go where.

In an aspect of the disclosure, the virtual iSIM further comprises a virtual on-time key pair.

In an aspect of the disclosure, binding a profile with the virtual one-time key of the virtual iSIM produces a virtual bound profile.

An aspect of the disclosure is directed toward a method for installing a RSP credential in an integrated SIM, the method comprising selecting a virtual bound credential by an In-Factory Binding Box, receiving, by the In-Factory Binding Box, a public part of a real TRE key associated with the iSIM, matching a virtual private TRE key of a virtual TRE key to a virtual public TRE key of the virtual bound credential, unbinding, by the In-Factory Binding Box the virtual bound credential that is associated with the virtual public TRE key to obtain the RSP credential, binding the RSP credential to the received real public TRE key of the real TRE key to obtain a real bound credential, deleting the virtual bound credential and the associated virtual TRE key, and installing on the iSIM the real bound credential.

In an aspect of the disclosure, the RSP credential is received from a remote activation server.

In an aspect of the disclosure, the virtual bound credential is stored in a secure storage of the In-Factory Binding Box.

An aspect of the disclosure is directed toward a system for installing RSP credential in an iSIM, the system comprising a remote activation server configured to generate RSP credential, receive from an In-Factory Binding Box an output file, bind a virtual public TRE key of a virtual TRE key of the output file with the RSP credential to form a virtual bound credential, and transmit the virtual bound credential to the In-Factory Binding Box; and the In-Factory Binding Box configured to carry out the method installing a RSP credential.

An aspect of the disclosure is directed toward an In-Factory Binding Box, comprising a processor; and memory storing one or more programs configured to be executed by the processor, the one or more programs including instructions for generating and storing a virtual iSIM, wherein the virtual iSIM comprises a virtual identifier and a virtual TRE key, wherein the virtual TRE key comprises a virtual public part and a virtual private part; forming an output file from the virtual identifier and the virtual public TRE key; transmitting the output file to a remote activation server, wherein the remote activation server binds the output file with a RSP credential to form a virtual bound credential; receiving the virtual bound credential from the remote activation server that is associated with the virtual iSIM, the virtual bound credential being bound to the corresponding virtual public TRE key from the output file; storing the virtual bound credential in a secured storage; receiving for each real iSIM a real iSIM identifier and a real public TRE key of a real TRE key; unbinding the virtual bound credential retrieved from secured profile database with the virtual TRE key stored by the In-Factory Binding Box to obtain the RSP credential, and re-binding the RSP credential to the real public TRE key associated with the real iSIM to form a real bound credential; sending the real bound credential to the iSIM in order to be installed on the iSIM.

In an aspect of the disclosure, communication with the remote activation server is made via an intermediary system.

In an aspect of the disclosure, the virtual iSIM further comprises a virtual one-time key pair.

An aspect of the disclosure further comprises transmitting the output to a profile manager, wherein the profile manager binds a profile with the virtual one-time key of the virtual iSIM to produce a virtual bound profile, receiving, from the profile manager, the virtual bound profile, and storing the virtual bound profile in a secured storage.

An aspect of the disclosure further comprises receiving for each real iSIM a real public one-time asymmetric key of a real one-time asymmetric key pair; unbinding the virtual bound profile retrieved from secured profile database with the virtual one-time key stored by the In-Factory Binding Box to obtain the profile, and re-binding the profile to the real one-time key associated with the real iSIM to form a real bound profile; and sending the real bound profile to the iSIM in order to be installed on the iSIM.

### Description of the Drawings

For a better understanding of the various described embodiments, reference should be made to the Description of Embodiments below, in conjunction with the following drawings in which like reference numerals refer to corresponding parts throughout the figures.
FIG. 1 represents an exemplary block diagram of an In-Factory Binding Box;
FIG. 2A represents an exemplary system for producing a virtual bound credential;
FIG. 2b represents another aspect of an exemplary system for producing a virtual bound credential;
FIG. 3 represents an exemplary system for installing a credential on an iSIM;
FIG. 4 represents an exemplary method for producing a virtual bound credential; and
FIG. 5 represents an exemplary method for installing a credential on an iSIM.

### Detailed Description

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

The following description includes references to various methods executed by a processor of an integrated circuit chip. As is common in the field, there may be phrases herein that indicate these methods or method steps are performed by software instructions or software modules. As a person skilled in the art knows, such descriptions should be taken to mean that a processor, in fact, executes the methods, software instructions, and software modules.

As previously discussed, an iSIM needs a profile to connect to a network, such as that managed by a mobile network operator (MNO). It is possible that there are separate entities that manufacture the iSIM and that manage the profiles. It is important that the profiles and iSIMs both receive a great deal of security. If the profile or iSIM were to be comprised, it could lead to many issues for the end user and/or manufacturers. For instance, if the iSIM and/or profile were to be "cloned," i.e., copied, such as by a hacker, it could allow the hacker to be able to take control, track, monitor, and listen to calls or texts of the device.

In order to prevent these sorts of outcome, the iSIM and profile are carefully controlled so that, in general, a profile is matched to an iSIM. The iSIM typically uses a set of keys for this process, and for associated communication, such as when loading a profile post-issuance of the device, such as a Remote SIM provisioning (RSP) key or loading a profile in production, such as a one-time key. However, this introduces more complexity into the manufacturing process, as the key for RSP protection needs to be loaded by the chip (SoC) manufacturer in a secure premises, the module maker will need to provide the virtual TRE IDs (vTRE_ID) (and TRE Public Key) while asking for the RSP credentials (bound with TRE Keys), the RSP credentials (sensitive asset) are prepared in EUM secure premises, and then the RSP credentials are bound to TRE Key in EUM secure premises.

At the very least, an RSP credential cannot be obtained by the manufacturer until they have the identifying information of the iSIM, as further discussed herein, in order to securely match the iSIM with the credential and/or profile. This can also prolong the production, since these operations would need to be done sequentially (e.g., obtain the iSIM identification information, transmit it to the remote activation server, produce the requisite credentials, etc.). This also creates the additional issue that for the module maker to know the TRE key, they need to receive it from chip makers. It may be undesirable to chip makers to have to provide information that can be used to track which chips goes in where, namely, in which specific devices. For instance, this information can present an additional security threat.

Thus, aspects of the present disclosure are directed toward various systems and methods that allow the manufacturer to disassociate the iSIM from the credentials and/or profile while still ensuring that the security of both are preserved. In an aspect, a "virtual iSIM" is used by the manufacturer. The virtual iSIM allows the manufacturer to communicate with the remote activation server and obtain from them a credential without the need for the identifying information of a physical iSIM. The virtual iSIM may additionally allow the manufacturer to communicate with a profile manager to obtain from them a profile. Thus, the manufacturer can reduce the full timeframe of production by "multitracking" the processes of obtaining the credential and producing the iSIM. This also gives the manufacturer additional flexibility in anticipating an unexpected or unknown quantity of iSIMs to be produced. Another aspect is directed toward an In-Factory Binding Box that allows the manufacturer to securely store and manage such sensitive aspects and operations of the process, potentially within the manufacturer's facility. These and other aspects and advantages of the disclosures are thus discussed herein.

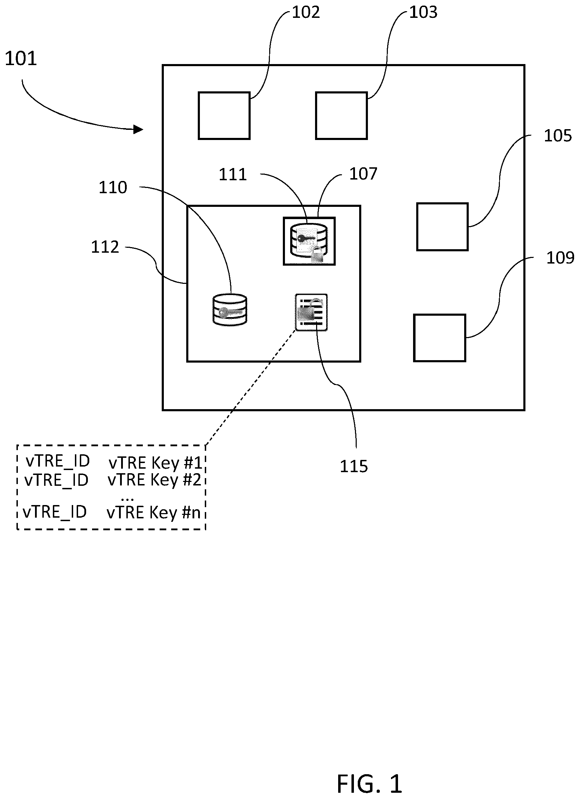

Figure 1 demonstrates a block diagram of an In-Factory Binding Box 101 (hereinafter, "IFBB") in accordance with the present disclosure. The various components shown in FIG. 1 are implemented in hardware, software, or a combination of both hardware and software, including one or more signal processing and/or application-specific integrated circuits. The IFBB 101 may include memory 102, a processor 103, an I/O module 105, an iSIM management module 109, and a database management system 112. It should be understood that these aspects described are representational, which is to say, that the aspects may be distributed within one contained system or across several systems that are otherwise linked, so as to provide the described functionality. For example, the processor 103 may be present as a single processor 103 within the IFBB 101, multiple processors 103 within the IFBB 101, and/or a distributed network of processors 103. That is to say, IFBB 101 and the associated components and modules can be implemented on one or more standalone data processing devices or a distributed network of computers. The modules may be physical hardware components within the system and/or software components designed to carry out the functionality of the module, such as APIs. In some examples, IFBB 101 can employ various virtual devices and/or services of third-party service providers (e.g., third-party cloud service providers) to provide the underlying computing resources and/or infrastructure resources of IFBB 101.

The processor 103 may be understood to be hardware that runs the computer program code. "Processor" may be synonymous with terms like controller and computer and should be understood to encompass not only computers having different architectures such as single/multi-processor architectures and sequential (Von Neumann)/parallel architectures but also specialized circuits such as field-programmable gate arrays (FPGA), application specific circuits (ASIC), signal processing devices and other devices.

Memory 102 can include any electronic, magnetic, optical, electromagnetic, infrared, or semiconductor system, apparatus, or device, a portable computer diskette (magnetic), a random access memory (RAM) (magnetic), a read-only memory (ROM) (magnetic), an erasable programmable read-only memory (EPROM) (magnetic), a portable optical disc such as CD, CD-R, CD-RW, DVD, DVD-R, or DVD-RW, or flash memory such as compact flash cards, secured digital cards, USB memory devices, memory sticks, and the like. In some examples, a non-transitory computer-readable storage medium of memory 102 can be used to store instructions (e.g., for performing some or all of processes, described below) for use by or in connection with an instruction execution system, apparatus, or device, such as a computer-based system, processor-containing system, or other system that can fetch the instructions from the instruction execution system, apparatus, or device, and execute the instructions. In other examples, the instructions can be stored on a non-transitory computer-readable storage medium of IFBB 101 or can be divided between the non-transitory computer-readable storage medium of memory 102 and the non-transitory computer-readable storage medium of IFBB 101. A "non-transitory computer readable storage medium" can be any medium that can contain or store the program for use by or in connection with the instruction execution system, apparatus, or device.

An I/O module 105 can be used to couple input and output peripherals of the device to memory 102 and processor 103, such as a keyboard, speakers, monitor, mouse, microphone, etc, when needed.

The IFBB includes a database management system 112 to securely store and manage a secure storage 107 that may be used to store, for example, a set of bound data 111, such as a bound mobile network operator (MNO) profile and/or a bound profile package received from a profile manager, and/or a bound credential received from a remote activation server, and a database of virtual iSIMs 115. The virtual iSIMs 115 may include virtual iSIM identifiers (vTRE_IDs) and their corresponding virtual key pairs (which may include one or both of a private key and a public key of TRE keys). In an aspect of the disclosure, the database management system 112 may store other relevant data associated with the credentials and/or profiles. For instance, a virtual iSIM may also include a virtual one-time (asymmetric) key pair 110, such as those used for binding a profile, and so a database may contain virtual one-time asymmetric key pairs 110. While these are shown to be contained by separate databases, it is considered that all relevant data may be stored by a single database, or across several databases.

The data management system 112 may have a key management system to store and manage the keys and certificates require to perform the binding/unbinding operations of the MNO profile. The key management system may also perform all cryptographic operations (key generation, binding and unbinding operations on credentials and MNO profiles, database protection...). The data management system 112 may have a hardware security module used to protect said databases in integrity and confidentiality.

The iSIM management module 109 may have various Application Programming Interfaces (APIs) to manage various operations of the iSIM management module 109. For instance, an API may retrieve a number of virtual iSIMs, including the virtual iSIM identifiers and virtual public keys, from the virtual key pairs stored by the database management system 112; an API may read a file received from a remote activation server and store a corresponding Bound Profile Package and/or bound credential in the secure storage 107; an API to retrieve a Bound Profile Package and/or bound credential from the profile database 107, unbind the profile and/or credential from the virtual key, re-bind it with a real key from a real iSIM, and send it to the iSIM. The iSIM management module 109 may allow the IFBB 101 to generate the virtual iSIMs, including the virtual iSIM identifiers vTRE_ID and their corresponding virtual key pairs. Alternatively, or additionally, the iSIMs may be generated outside of the IFBB 101, such as, for example, on the IFBB 101 manufacturer site in a secure location (such as a site that has received a comprehensive security audit) and then loaded into the IFBB 101.

In an embodiment, the iSIM management module 109 may include an API to retrieve a batch of virtual iSIMs, which may be composed of virtual iSIM identifiers and virtual public keys, from the virtual key pair and virtual iSIM identifiers generated on-the-fly by the IFBB 101 and stored in the database management system 112; alternatively, or additionally, the iSIM management module 109 may include an API to generate virtual iSIMs that may be composed of virtual iSIM identifiers and virtual key pair, and store the virtual iSIMs on database management system 112.

In an embodiment, the IFBB 101 may include a secure network module that is configured to provide a network connection with another system, such as a system on an internal network, while excluding access from third parties. For instance, it may be desirable for the IFBB 101 to be disconnected from an external network, such as the internet, while still maintaining the capability to transmit and receive data from a specific internal and/or external system. Thus, the secure network module may provide a connection to a specific system while excluding all other access. This may be accomplished via a "hard," i.e. physical, connection, such as a network cable that directly connects the IFBB 101 to the external system. It is also conceived that the secure connection may be maintained indirectly, such as through a secure router, and/or through a wireless network, such as WiFi, Bluetooth^{®}, etc. The connection may be time-limited, such that the secure network module may primarily and/or only operate the connection during a transfer and otherwise remain in a disconnected state.

In an aspect of the disclosure, the IFBB 101 does not maintain an external network connection at all. Thus, the IFBB 101 is configured to externally transfer any requested files. For instance, the IFBB 101 may interact with an external hardware store device, such as a USB key, which may be manually operated and/or transported by an operator. The "secure connection" referred to within this application may refer to the secure transfer of files via either of these means, i.e., a direct network connection or the manual operation described.

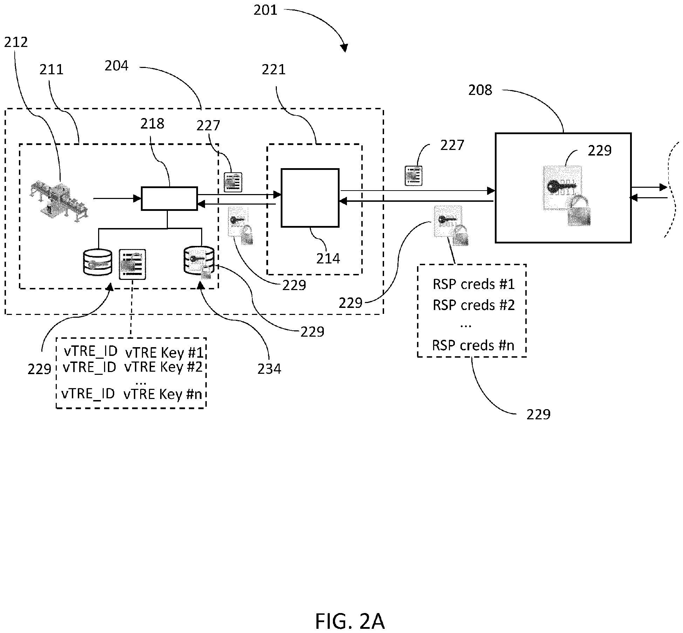

FIG. 2A demonstrates a system 201 for creating a credential bound with a virtual key 229. That is to say, the binding may be "real," the credentials may be "real," and it may be the key that is used to bind the credentials that is virtual. This credential bound with a virtual key may hereinafter be referred to as a "virtual credential"). The system may include a manufacturer 204 and a remote activation server 208. The manufacturer 204 may be a manufacturer of electronic devices, discussed herein. For instance, the manufacturer 204 may be a producer of smart meters, cars, health devices, tracking devices, mobile communication devices, etc. This type of manufacturer 204 is typically referred to as an Original Equipment Manufacturer (OEM) and will usually take the different elements of the bill of materials to produce the desired device. It is possible that each element of the bill of materials may be delivered to the manufacturer 204 by different suppliers. For instance, the supplier of the iSIM is typically called an eUICC Manufacturer (EUM). In this example, the manufacturer 204 may receive the iSIM from the EUM, the resistors from resistor supplier, etc., and store these elements, such as in a manufacturer 204 warehouse.

The manufacturer 204 may include a production line 211 and an intermediary system 214. The production line 211 is where the manufacturer 204 will take the different elements of the bill of materials to produce the device. For example, the elements may be the Printed Circuit Board (PCB), all the components that will be soldered on the PCB (capacitors, resistors, microcontroller, eSIM,), screens, buttons, cases, etc. When the manufacturer 204 is ready to produce the final devices, the manufacturer 204 will take all these elements, such as from the warehouse, and bring them to the production line 211, where they may be assembled on an assembly line 212.

The production line may include an IFBB 218, such as the IFBB 218 described previously in reference to FIG. 1. The manufacturer may be arranged such that the production line 211 and the intermediary system 214 are connected and/or in communication with each other; however, the production line may be disconnected from any other external network. The intermediary system 214 may be located in a remote location 221 from the production line 211, and the intermediary system 214 may be connected to an external network. In this way, the intermediary system 214 may act as a firewall between the production line 211 (specifically the binding box 218) and the external network.

The IFBB 218 may be configured to produce an output file 227. The output file 227 may contain the public part of a virtual TRE key and the corresponding vTRE_ID. The private part of the virtual TRE key may also be generated and/or stored by the IFBB 218. The virtual TRE keys and vTRE_ID may be stored in a database 234 within and/or connected to the IFBB 218. The output file may be sent to the intermediary system 214 by the IFBB 218 via the secure connection.

The intermediary system 214 may be, for instance, a production office, i.e., a regular desktop environment with an internet connection. The intermediary system 214 may receive the output file 227 from the IFBB 218 and forward it to the profile manager 208. So as to maintain the security of the IFBB 218, the intermediary system 214 may maintain a connection with the IFBB 218 that is separate from the connection with the profile manager 208. For example, the intermediary system 214 may connect to the IFBB 218, receive the output file 227, disconnect from the IFBB 218, connect to the profile manager 208, and transmit to the profile manager 208 the output file 227. In this way, there is no connection between the IFBB 218 and the "outside world," i.e., external access apart from what is specifically sanctioned by the manufacturer, save for what is conducted through the intermediary system 214. The inverse process is also considered, i.e., for when the intermediary system 214 is receiving a file from the profile manager 208. Other manners of firewalling between the IFBB 218 and the outside world are considered.

In an aspect of the disclosure, the production line 211 may itself maintain an external network connection. In this case, the intermediary system 214 may be unnecessary as the IFBB 218 can communicate directly with the remote activation server 208, such as through an internet connection.

The remote activation server 208 may be a server that manages the binding of sensitive assets to a Public key received as an input. For instance, the remote activation server 208 may prepare (generate and/or stores) credentials that are used to load a profile onto a device, and binds the credentials to the public part of the virtual TRE Key received as an input. For instance, these credentials may be ECASD keys.

The remote activation server 208 may form a virtual bound credential 229 by combining a RSP key prepared by the remote activation server 208 with the vTRE_ID and the associated public part of the virtual TRE key, as received in the output file 227. The RSP credential may be an RSP key or keys, as well as certificates ( such as, for example, SK.EUICC.ECDSA for Private Key, PK.EUICC.ECDSA for Public Key and CERT.EUICC.ECDSA for Certificate). The virtual bound credential 229 may be transmitted to the IFBB 218, such as via the intermediary system 214, where it may be stored in secure storage 234.

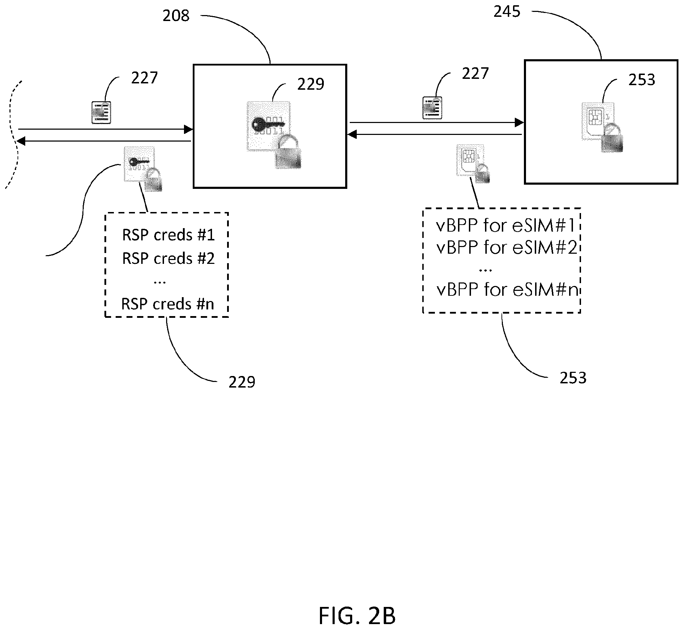

FIG. 2B demonstrates an aspect of the system where it is desirable to also obtain a profile for the IFBB, such as for in-factory profile provisioning, in addition to the ECASD credentials for remote SIM provisioning. In this case, the output file may also include a private key of a virtual one-time asymmetric key pair. The virtual one-time asymmetric key pair may be generated and/or stored in the database 234 of the IFBB 218 in a similar fashion to the virtual TRE key.

The output file may be transmitted to a provisioning server 245, where a profile may be bound with the virtual key of the virtual one-time asymmetric key pair to form a "virtual" bound profile 253, such as in a similar fashion to the formation of the virtual bound credential 229. So to say, the profile is "real" in that it may be used for a device, while the keys used to bind it are virtual in that they are not associated with an actual device. The virtual bound profile 253 may then be transmitted back to the IFBB 218, such as via the remote activation server 208 and/or the intermediary system 214.

In an aspect of the disclosure, the virtual bound credential 229 may include aspects and/or components of the virtual bound profile. It is considered that the provisioning server may also be the remote activation server such that both activities can be conducted by the same server without need for further transmission. Thus, it is to be considered that the virtual bound credential 229 may optionally be considered to include the virtual bound profile 253 even where not shown.

In an aspect of the disclosure, the remote activation server 208 may generate both the RSP credentials for post-issuance and the virtual one-time key pair for in-factory issuance. Thus, the virtual one-time key (e.g., the public part of the virtual asymmetric one-time key pair) may be sent by the remote activation server 208 to the profile manager 245. The profile manager may then bind the profile with the virtual one-time key to produce a "virtual" bound profile. The profile bound with the one-time key 253 may then be sent back to the remote activation server 208, who will send it back to the manufacturer 204. Alternatively, or additionally, they may be sent back to the manufacturer 204, who will then send them to the profile manager 245. Thus, the profile bound with the one-time key 253 may be sent directly to the manufacturer 204.

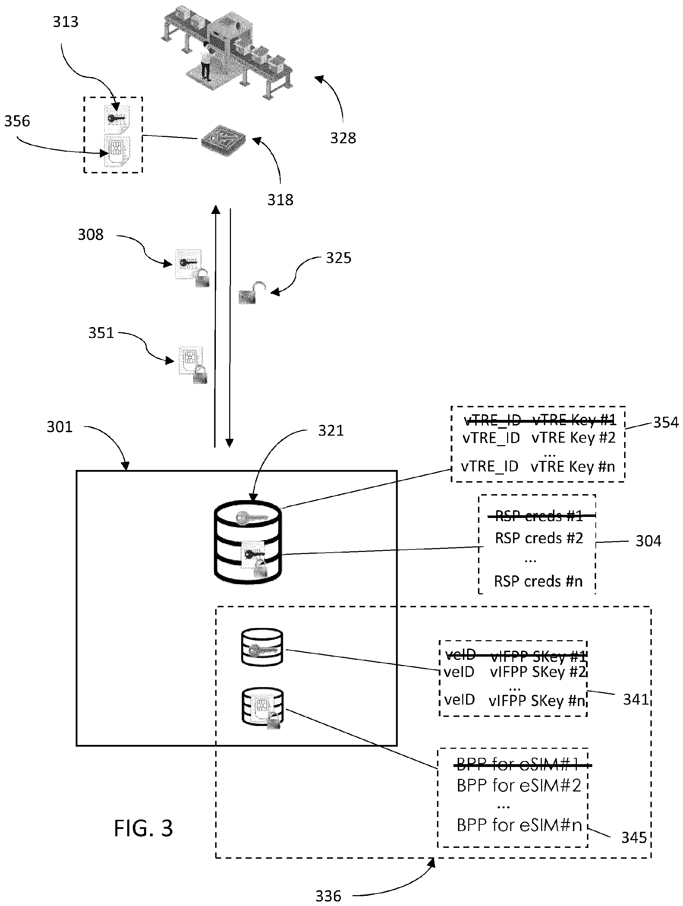

FIG. 3 demonstrates a system for converting by an IFBB 301 a virtual bound credential 304 into a "real" bound credential 308 and installing a RSP key 313 onto an iSIM 318. As previously discussed, the IFBB 301 has a virtual bound credential 304 stored in a secure storage 321. The IFBB 301 may receive a request to provision an iSIM 318. The request may contain a real public key of a real TRE key 325 associated with the iSIM 318, such as an iSIM 318 that is on the assembly line 328. The IFBB 301 may select the virtual bound credential 304 and unbind the RSP key 313 from the virtual TRE key 227 using the virtual private key of the virtual TRE key (stored in secure storage 321) associated with the virtual bound credential 304. The IFBB 301 may then bind the RSP key 313 to the public key of the real TRE key 325 associated with the iSIM 318 to form the real bound credential 308 . The real bound credential 308 may be installed on the iSIM 318, where it may be unlocked by the real private key of the real TRE key to access the RSP key 313 stored within the real bound credential 308. This credential, once installed on the iSIM 318, may allow the iSIM 318 to load a profile in post-issuance using RSP.

In an aspect of the disclosure, the IFBB 301 may also contain profile information 336 for the iSIM 318, for example, but not limited to, virtual one-time keys 341 and provisional profiles, including bound profile packages 345 (BPP). Thus, similar to the process described above, the IFBB 301 may receive a "real" one-time key from the iSIM 318, the IFBB 301 may unbind the bound profile package 345, and the IFBB 301 may rebind the profile package with the real one-time key to produce a real bound profile 351. The real bound profile 351 may be transmitted to the iSIM 318. The profile 356 and associated data may be securely stored within the iSIM 318.

After the virtual bound credential 304 has been unbound, substantially all data related to the virtual bound credential 304 may be erased from the IFBB 301. For example, the RSP key 304, the virtual TRE key, and the virtual TRE_ID, so as to prevent any inadvertent or otherwise reutilization of the same data for a different device. In an example where the IFBB 218 includes a batch of virtual bound credential, the data of the virtual bound credential that was selected for installation onto the iSIM 318 may be deleted, maintaining the remainder of the batch for future installation. Thus, also similarly to the process previously described for the bound credential, the bound provisional profile 351 may be sent to the iSIM 318, and the related aspects within the IFBB 301 may be deleted.

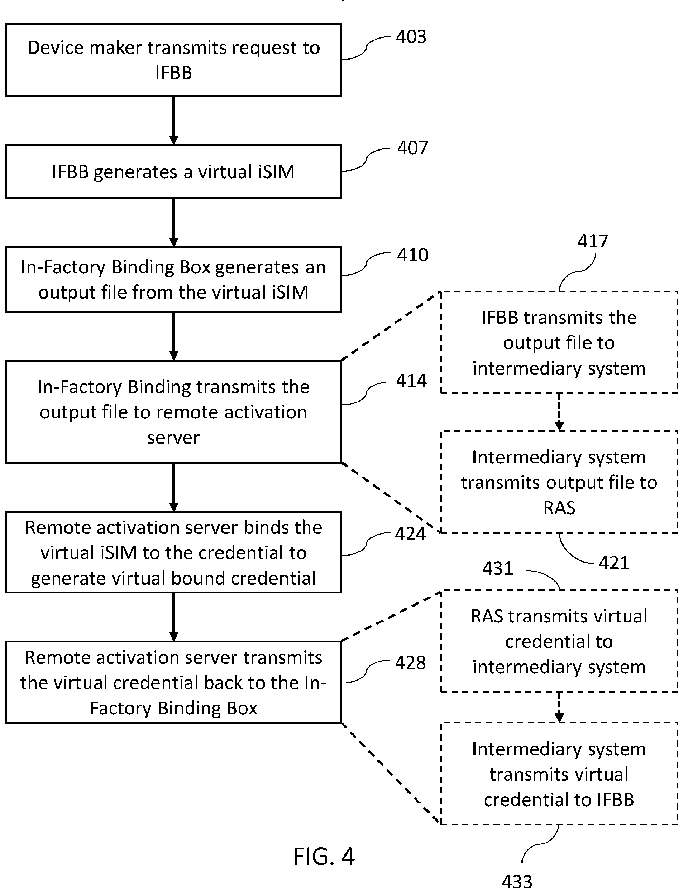

FIG. 4 demonstrates an exemplary flowchart of a process for creating a virtual bound credential. A device maker may determine to prepare a quantity of connected devices for production. These devices may be a computing device such as a laptop computer, a tablet, a telephone, a media player, or other portable electronic device, a wearable device, a headphone, an embedded device, a television, a gaming device, a navigation device, equipment that implements the functionality of two or more of these devices, or other electronic equipment. Also considered are any other type of electronic computing device having wireless communication capability that can include communication via one or more wireless communication protocols such as used for communication on: a wireless wide area network (WWAN), a wireless metro area network (WMAN) a wireless local area network (WLAN), a wireless personal area network (WPAN), a near field communication (NFC), a cellular wireless network, a fourth generation (4G) Long Term Evolution (LTE), LTE Advanced (LTE-A), fifth generation (5G), and/or sixth generation (6G) or other present or future developed advanced cellular wireless networks. Other types of network-linked systems and devices are considered as well, such as, for instance, vehicles and M2M devices, so long as they are providing an interface to interact with an end-user and a network connection. Each device may have an associated iSIM.

The device maker may desire to match each device with a RSP key. Put another way, the device maker may desire to match each iSIM with a RSP key. For instance, a device with multiple iSIMs may be associated with multiple RSP keys such that each iSIM is matched with a corresponding RSP key. A virtual iSIM may include a virtual iSIM identifiers vTRE_ID and a corresponding virtual TRE key. Thus, each iSIM identifier TRE_ID and each virtual TRE key may correspond to a device.
It should be understood that although the process for a single device, virtual iSIM, etc., will be outlined herein in order to make clear the correspondence between said features, the process (and all methods and systems thus described) could apply for a batch of requests, devices, virtual iSIMs, real iSIMs, etc., and is easily contemplated and understood from the disclosure. The device maker may thus transmit a request to an IFBB to generate a RSP key for each device, as at Step 403. In an aspect of the disclosure, IFBB may be installed in the premises of the device maker, such as on the production line.

In step 407, The IFBB may generate a virtual iSIM. In an aspect of the disclosure, virtual iSIM(s) may be pre-generated, such that they were generated prior to the request and are stored by the IFBB. In an aspect of the disclosure, the virtual iSIMs may be uncorrelated to physical iSIMs. For example, a virtual iSIM may be generated that has no physical counterpart at the time of creation. A virtual iSIM may include a virtual iSIM identifier and a corresponding virtual TRE key pair. This process may take place before, during, and/or after the device maker has ordered iSIMs, such as to be integrated into the device, from the EUM. That is to say, the device maker may send a request to the EUM to receive physical iSIMs from the EUM, with each iSIM being loaded with a real TRE key and an iSIM identifier by the EUM. Stated differently, this request may be decoupled from the above process, such that the manufacturer may separately obtain the virtual bound RSP key and obtain the iSIM without correlating between the two or having to plan ahead. Further, this also allows the manufacturer freedom from determining in advance a quantity of iSIMs and/or RSP keys that may be needed, as sufficient virtual RSP keys may be used to account for a future demand in iSIMs.

In response to the request, the IFBB may prepare an output file, such as at step 410. The output file may contain the public key of the virtual TRE key and the virtual iSIM identifier vTRE_ID.

In step 414, the output file may be transmitted to a remote activation server to obtain a bound credential (e.g., RSP or one-time key) for the virtual iSIM. For instance, the output file may be first transmitted to an intermediary system that is in communication with a remote activation server, such as at step 417. For example, the output file may be transmitted outside of the production line, which does not have an internet connection or is otherwise firewalled from external networks for security purposes, to another part of the factory, which does have an internet connection or otherwise is in communication with an external network. Alternatively, or additionally, the output file may be transmitted outside the factory, so long as the system that receives the output file acts as a buffer between the IFBB and the remote activation server. Alternatively, or additionally, it is considered that IFBB, and/or a portion of the IFBB may be moved and/or changed from a state in which the IFBB does not have a connection with the remote activation server to a state in which the IFBB does have a connection with the remote activation server, such as by moving the IFBB, through software means such as toggling a network connection, and/or through hardware means such as through attaching a network cable.

The intermediary system may transmit the output file to the remote activation server, such as at step 421. Although the virtual iSIM identifier vTRE_ID is "synthetic," in that it may not literally correspond with a physical iSIM, it may appear "authentic" to the remote activation server, meaning that the remote activation server may not be able to detect that the iSIM identifier vTRE_ID is synthetic. Thus, the remote activation server may bind the virtual iSIM identifier vTRE_ID with a key, such as a RSP or one-time key, to create a "virtual" bound credential, such as at step 424. That is to say, the RSP key is authentic but it is bound to the virtual iSIM identifier vTRE_ID, which is synthetic. The RSP key may be generated in response to the request or may have been previously generated.

The remote activation server may bind the RSP key by "locking" the virtual bound credential with the provided public key of the virtual TRE key such that the contents of the virtual bound credential may only be accessed with the corresponding virtual private key of the virtual TRE Key.

In step 428, the virtual bound credential may be returned to the manufacturer, such as via the intermediary system, as show in Step 431 wherein the remote activation server transmits the virtual bound credential to the intermediary system, and in step 433 where the intermediary system transmits the virtual bound credential to the IFBB. The virtual bound credential may be stored by the IFBB.

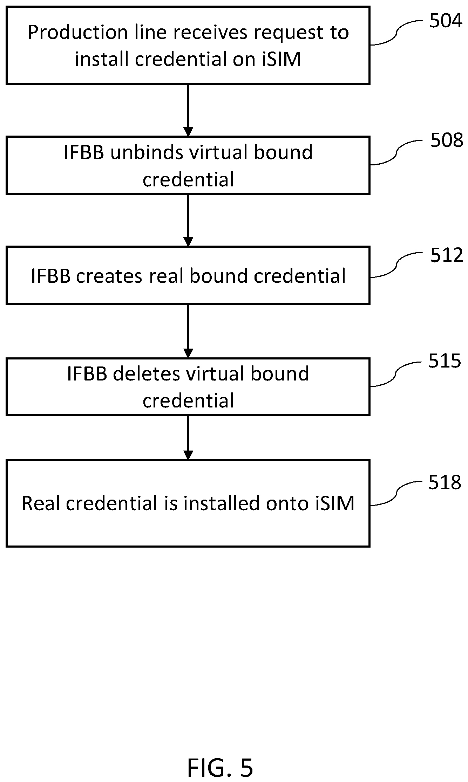

FIG. 5 demonstrates an exemplary flowchart of a process installing a RSP credential from a virtual bound credential into an iSIM. In STEP 504, the production line may receive a request to install a RSP key on a physical iSIM. The production line is thus in communication with the physical iSIM either directly via ISO interface or through an agent located in the device containing the iSIM or located on a test PC connected to the device being manufactured. In STEP 508, The IFBB may select a virtual bound credential for installation and "unlock" the virtual bound credential by using the virtual private key of the virtual TRE key that matches the virtual public key of the virtual bound credential. The IFBB may locate said corresponding virtual private key by using the virtual private key that is associated with the virtual iSIM identifier vTRE_ID of the virtual bound RSP key. Thus, the IFBB is able to unbind the RSP key from the virtual bound credential. In an aspect of the disclosure wherein the IFBB stores several virtual bound credentials in the secure storage, the IFBB may thus select one of the several virtual bound credentials for unbinding. The selection may be, for example, made at random.

In STEP 512, IFBB may then bind the RSP key with a real public key of a real TRE key that is associated with the physical iSIM to create a "real" bound credential, which is to say, a bound credential that corresponds to the physical iSIM. The real public key may be transmitted to the IFBB by the iSIM and the corresponding real private key of the TRE key may be stored on the iSIM so that they correspond. The IFBB may then delete any data related to the virtual bound credential and/or virtual iSIM that were used so as to prevent cloning, such as at STEP 515. In STEP 518, the real bound credential may be installed onto the corresponding physical iSIM, such as by using 2-step personalization as defined by GSMA. The corresponding physical iSIM contains the real private key of the real TRE key that is able to unlock the real bound credential, allowing the RSP key to be loaded into the iSIM of the device.

Although specific embodiments of the invention have been described and illustrated, the invention is not to be limited to the specific forms or arrangements of parts so described and illustrated. The invention is limited only by the claims.

## Claims

1. A virtual bound credential (227), created by the steps of:
Generating by an In-Factory Binding Box (101; 218) a virtual iSIM, wherein the virtual iSIM comprises a virtual iSIM identifier (vTRE_ID) and a virtual TRE key pair, wherein the virtual TRE key pair comprises a virtual TRE public part and a virtual TRE private part;
preparing by the In-Factory Binding Box (101; 218) an output file (227) comprising the virtual identifer (vTRE_ID) and the virtual TRE public part of the virtual TRE key pair that corresponds to the virtual iSIM, and
binding, by a remote activation server (208), the output file (227) with a RSP credential to form the virtual bound credential (229).

2. The virtual bound credential of claim 1, further comprising that the In-Factory Binding Box (101) transmits the output file (227) to an intermediary system (214) and the intermediary system (214) transmits the output file to the remote activation server (208).

3. The virtual bound credential of claims 1 or 2, wherein the RSP credential is generated by the remote activation server (208).

4. The virtual bound credential of claims 1-3, further comprising that the virtual bound credential (229, 231) is stored within a secure storage (107; 234) of the In-Factory Binding Box (101).

5. The virtual bound credential of claims 1-4, wherein the virtual iSIM further comprises a virtual one-time key pair.

6. The virtual bound profile of claims 5, further comprising binding a profile with the virtual one-time key of the virtual iSIM to produce a virtual bound profile.

7. A method for installing a RSP credential in an integrated SIM (303), the method comprising:
selecting a virtual bound credential (229) according to any of claims 1-6 by an In-Factory Binding Box (101; 218),
receiving, by the In-Factory Binding Box (101), a public part (305) of a real TRE key associated with the iSIM (303),
matching a virtual private TRE key of a virtual TRE key to a virtual public TRE key of the virtual bound credential (229),
unbinding, by the In-Factory Binding Box (101; 218) the virtual bound credential (229) that is associated with the virtual public TRE key to obtain the RSP credential,
binding the RSP credential to the received real public TRE key (305) of the real TRE key to obtain a real bound credential (307),
deleting the virtual bound credential (229) and the associated virtual TRE key, and
installing on the iSIM (303) the real bound credential (307).

8. The method according to claim 7, wherein the RSP credential is received from a remote activation server (208).

9. The method of according to claim 7 or 8, wherein the virtual bound credential (229) is stored in a secure storage (107; 234) of the In-Factory Binding Box (101; 218).

10. A system for installing RSP credential in an iSIM (303), the system comprising:
a remote activation server configured to:
generate RSP credential,
receive from an In-Factory Binding Box (101; 218) an output file (227),
bind a virtual public TRE key of a virtual TRE key of the output file (227) with the RSP credential to form a virtual bound credential (229), and
transmit the virtual bound credential (229) to the In-Factory Binding Box (101; 218); and
the In-Factory Binding Box (101; 218) configured to carry out the method of any of claims claim 7-9.

11. An In-Factory Binding Box (101; 218), comprising:
a processor (103); and
memory (102) storing one or more programs configured to be executed by the processor (103), the one or more programs including instructions for:
generating and storing a virtual iSIM, wherein the virtual iSIM comprises a virtual identifier (vTRE_ID) and a virtual TRE key, wherein the virtual TRE key comprises a virtual public part and a virtual private part;
forming an output file (227) from the virtual identifier (vTRE_ID) and the virtual public TRE key;
transmitting the output file (227) to a remote activation server (208), wherein the remote activation server binds the output file (227) with a RSP credential to form a virtual bound credential (229);
receiving the virtual bound credential (229) from the remote activation server (208) that is associated with the virtual iSIM, the virtual bound credential (229) being bound to the corresponding virtual public TRE key from the output file (227);
storing the virtual bound credential (229) in a secured storage (107; 234);
receiving for each real iSIM (303) a real iSIM identifier and a real public TRE key (305) of a real TRE key;
unbinding the virtual bound credential (229) retrieved from secured profile database (107; 234) with the virtual TRE key stored by the In-Factory Binding Box (101; 218) to obtain the RSP credential, and re-binding (43) the RSP credential to the real public TRE key (305) associated with the real iSIM (303) to form a real bound credential;
sending the real bound credential (307) to the iSIM (303) in order to be installed on the iSIM (303).

12. The In-Factory Binding Box (101; 218) according to claim 11, further comprising that communication with the remote activation server (208) is made via an intermediary system (214).

13. The In-Factory Binding Box (101; 218) according to any of claims 11-12, wherein the virtual iSIM further comprises a virtual one-time key pair.

14. The In-Factory Binding Box (101; 218) according to claim 13, further comprising
transmitting the output file (227) to a profile manager, wherein the profile manager binds a profile with the virtual one-time key of the virtual iSIM to produce a virtual bound profile,
receiving, from the profile manager, the virtual bound profile, and
storing the virtual bound profile in a secured storage (107; 234).

15. The In-Factory Binding Box (101; 218) according to claim 14, further comprising
receiving for each real iSIM (303) a real public one-time asymmetric key (305) of a real one-time asymmetric key pair;
unbinding the virtual bound profile retrieved from secured profile database (107; 234) with the virtual one-time key stored by the In-Factory Binding Box (101; 218) to obtain the profile, and re-binding (43) the profile to the real one-time key (305) associated with the real iSIM (303) to form a real bound profile; and
sending the real bound profile (307) to the iSIM (303) in order to be installed on the iSIM (303).
